# FASCICULE DE BREVET EUROPEEN

(11) **EP 2 483 329 B1**
(45) Date de publication et mention de la délivrance du brevet: **22.09.2021**
(21) Numéro de dépôt: 10757776.9
(22) Date de dépôt: 28.09.2010
(51) Int. Cl.: C08G 69/36, C08L 77/00, C08L 77/02, C08L 77/06

(54) **POLYAMIDES A FLUIDITE ELEVEE**
POLYAMIDE MIT HOHER FLIESSFÄHIGKEIT
HIGH-FLUIDITY POLYAMIDES

(30) Priorité: 30.09.2009 FR 0956789
(43) Date de publication de la demande: 08.08.2012
(73) Titulaire: POLYTECHNYL S.A.S., 75009 Paris (FR)
(72) Inventeur: SPERONI, Franco, I-20020 Ceriano Laghetto (MI) (IT); ZAHER, Damien, I-26841 Casalpusterlengo (LODI) (IT)
(74) Mandataire: Chatelan, Florence Anne
(86) Numéro de dépôt international: PCT/EP2010/064355
(87) Numéro de publication internationale: WO 2011/039183

(56) Documents cités:
- EP-A2- 0 408 957
- WO-A1-99/64496
- WO-A1-2007/113262
- GB-A- 1 455 186
- US-A- 5 760 163
- None

## Description

L'invention concerne un polyamide modifié par un composé multifonctionnel ainsi qu'un procédé de fabrication dudit polyamide et les compositions comprenant ce polyamide. Elle concerne plus particulièrement un procédé de fabrication d'un polyamide comprenant des chaînes macromoléculaires linéaires et des chaînes macromoléculaires de type étoile. Le polyamide ainsi obtenu présente des propriétés mécaniques et rhéologiques optimales pour d'une part améliorer la vitesse et la qualité de remplissage des moules et d'autre part la réalisation de compositions moulables comprenant des taux de charges élevées.

### ART ANTERIEUR

La demande internationale WO2007/113262 décrit l'obtention de polyamides de haute fluidité, par polymérisation de monomères diacides et diamines en présence de composés multifonctionnels et monofonctionnels capable de former une fonction amide avec soit une fonction amine, soit une fonction acide.

Le brevet US5760163 décrit la préparation de polyamides branchés par mélange de pré-polymères et d'acide carboxylique polybasique.

Le brevet GB1455186 porte sur des filaments polyamide multicomposants.

La demande de brevet EP0408957 décrit pour sa part des fondues de lactames à viscosité élevée.

Ces dernières années ont vu le développement de polyamides à structure branchée, notamment de type étoile, présentant une haute fluidité à l'état fondu. Ces polyamides peuvent être utilisés pour la fabrication de différents articles tels que des films, fils, fibres ou des articles moulés comprenant des charges ou non. On peut notamment citer les polyamides étoiles décrits par P.J. Flory (JACS 70 2709-18, 1948) et ceux mentionnés dans les demandes internationales WO97/24388 et WO99/64496.

Il est ainsi connu d'utiliser des composés multifonctionnels pour accroitre la fluidité et les propriétés mécaniques des polyamides de type AB, tel que le PA6.

Il existait un besoin d'obtenir des polyamides de ce type présentant un bien meilleurs compromis de propriétés rhéologiques et mécaniques, en présence ou en absence de charges de renfort ou de remplissage, qui soient facile à préparer, avec un très bon contrôle de la croissance et la concentration des chaines étoiles lors de la polymérisation.

A cet effet, l'invention propose, selon un premier mode de réalisation, un polyamide modifié, comprenant des chaînes macromoléculaires linéaires et des chaînes macromoléculaires de structure étoile, susceptible d'être obtenu par polycondensation d'au moins un mélange de monomères comprenant au moins :
a) des monomères de formule générale (I) suivante : 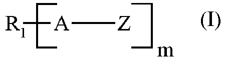
b) des monomères de formules générales (IIa) et (IIb) suivantes :

   X-R₂-Y (IIa)

   ou 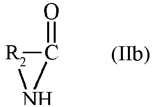
c) des monomères de formule générale (III) suivante :

   Z-R₃-Z (III)

   dans lesquelles :
   - R₁ est un radical hydrocarboné comprenant au moins deux atomes de carbone, linéaire ou cyclique, aromatique ou aliphatique et pouvant comprendre des hétéroatomes,
   - A est une liaison covalente ou un radical hydrocarboné aliphatique comprenant de 1 à 6 atomes de carbone,
   - Z représente un groupement carboxylique
   - R₂, R₃ identiques ou différents représentent des radicaux hydrocarbonés aliphatiques, cycloaliphatiques ou aromatiques substitués ou non comprenant de 2 à 20 atomes de carbone, et pouvant comprendre des hétéroatomes,
   - Y est un radical amine primaire quand X représente un radical carboxylique, ou
   - Y est un radical carboxylique quand X représente un radical amine primaire, et
   - m étant un nombre entier compris entre 3 et 8.

L'invention propose, selon un second mode de réalisation, un polyamide modifié, comprenant des chaînes macromoléculaires linéaires et des chaînes macromoléculaires de structure étoile, susceptible d'être obtenu par polycondensation d'au moins un mélange de monomères comprenant au moins :
a) des monomères de formule générale (I) suivante : 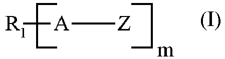
b) des monomères de formules générales (IIa) et (IIb) suivantes :

   X-R₂-Y (IIa)

   ou 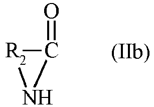
c) des monomères de formule générale (III) suivante :

   Z-R₃-Z (III)

   dans lesquelles :
   - R₁ est un radical hydrocarboné comprenant au moins deux atomes de carbone, linéaire ou cyclique, aromatique ou aliphatique et pouvant comprendre des hétéroatomes,
   - A est une liaison covalente ou un radical hydrocarboné aliphatique comprenant de 1 à 6 atomes de carbone,
   - Z représente un radical amine primaire
   - R₂, R₃ identiques ou différents représentent des radicaux hydrocarbonés aliphatiques, cycloaliphatiques ou aromatiques substitués ou non comprenant de 2 à 20 atomes de carbone, et pouvant comprendre des hétéroatomes,
   - X représente un radical carboxylique ou un radical amine primaire ; et Y est un radical amine primaire quand X représente un radical carboxylique, ou Y est un radical carboxylique quand X représente un radical amine primaire,
   - m étant un nombre entier compris entre 3 et 8,

La concentration molaire des monomères de formule (I) dans le mélange de monomères est comprise entre 0,01 % et 1 %, préférentiellement de 0,03 et 0,5 %; le complément à 100 % correspondant aux monomères de formules générales (IIa) ou (IIb).

Le rapport molaire entre les monomères de formule (I) et les monomères de formule (III) est compris entre 0,01 et 0,4.

La concentration des monomères de formule (III) est comprise entre 0,1 % et 2 %, préférentiellement entre 0,2 et 1 % ; le complément à 100 % correspondant aux monomères de formules générales (IIa) ou (IIb).

La réaction de polymérisation est avantageusement réalisée jusqu'à l'obtention du degré de polymérisation maximal, en présence, éventuellement, d'un initiateur de polycondensation.

Dans ces conditions, le procédé de l'invention permet d'obtenir de manière fiable et industrielle un polymère comprenant une concentration en chaînes de type étoile optimale pour des propriétés mécaniques et rhéologiques recherchées. Ainsi, cette concentration en nombre de chaînes polyamide de type étoile est avantageusement comprise entre 0,5 et 35 %, de préférence entre 1 et 30 %, par rapport au nombre de chaines totale de polyamide.

La polycondensation est réalisée selon des conditions de mise en œuvre habituellement utilisées pour la polycondensation des aminoacides ou lactames, sans composés polyfonctionnels de formule (I). Cette polycondensation peut être réalisée de manière continue, discontinue ou semi-continue.

Le procédé de polycondensation de polyamide comprend généralement :
- un chauffage sous agitation et sous pression du mélange des monomères de formules (I) à (III) avec l'initiateur de polycondensation, généralement de l'eau,
- maintien du mélange à cette température pendant une durée déterminée, puis décompression et maintien sous un courant de gaz inerte, par exemple de l'azote, pendant une durée déterminée à une température supérieure au point de fusion du mélange pour ainsi continuer la polycondensation par élimination de l'eau formée.

La concentration molaire en chaînes linéaires ou chaînes de type étoile est déterminée par le rapport entre les composés difonctionnels de formule (III) et les composés multifonctionnels de formule (I). La polymérisation est notamment réalisée jusqu'à l'équilibre thermodynamique.

Bien entendu, la concentration molaire en chaînes de type étoile est également déterminée par la concentration molaire en monomère multifonctionnel de formule (I) dans le mélange de monomères.

Par ailleurs, le poids moléculaire du polymère est déterminé par la concentration molaire des monomères multifonctionnels de formule (I) et des monomères difonctionnels de formule (IIa) ou (IIb).

Le modèle de calcul de la concentration en chaînes de type étoile utilisé est le modèle de FARINA décrit dans la demande WO99/64496. Ce modèle est un modèle statique qui prend en considération uniquement et seulement la totalité des chaînes linéaires et la totalité des chaînes de type étoile présentes dans le polymère final.

Le procédé de polymérisation est un procédé dynamique dans lequel, avant l'obtention d'une conversion totale du polymère, le milieu réactionnel comprend un mélange de chaînes moléculaires de types différents telles que celles correspondantes à une réaction avec un, deux ou trois fonctions du monomère polyfonctionnel. Ainsi, dans le cas d'un monomère tétracarboxylique, le milieu réactionnel comprend des chaînes dans lesquelles une, deux ou trois fonctions carboxyliques n'ont pas réagi.

Le modèle proposé par YUAN décrit dans la demande WO99/64496 considère la présence de ces différentes chaînes moléculaires et l'évolution dynamique de celles-ci. Ainsi, avec ce modèle il est possible de calculer la quantité réelle de chaînes linéaires dans le polymère pour tous les degrés de conversion.

Le procédé de l'invention permet donc d'obtenir un polyamide de poids moléculaire déterminé par détermination de la concentration molaire des monomères multifonctionnels de formule (I) et monomères difonctionnels de formule (III) dans le mélange de monomères, et avec un rapport en nombre chaîne type étoile/chaîne linéaire contrôlé par le rapport molaire entre ces deux types de monomères, pour une polymérisation réalisée jusqu'à l'équilibre thermodynamique de la réaction.

Ainsi, le procédé de fabrication des polyamides contenant un mélange de chaînes de type étoile et de chaînes linéaires est facilement réalisable et permet de fabriquer de manière reproductible et industrielle des polyamides présentant les propriétés rhéologiques et mécaniques optimales et désirées.

Par ailleurs, comme le polyamide conforme à l'invention présente un indice de fluidité à l'état fondu plus élevé que les polyamides linéaires connus, pour des masses moléculaires et des propriétés mécaniques similaires, la composition chargée peut être injectée plus facilement dans un moule , c'est-à-dire à des cadences plus élevées. Elle permet également d'obtenir un remplissage plus homogène et complet des moules, notamment quand ceux-ci ont une forme complexe.

Selon l'invention, le monomère de formule générale (I) comprend un radical R₁ qui peut être avantageusement un radical trivalent phényle, cyclohexanyle substitué ou non, des radicaux tétravalents de diaminopolyméthylène avec un nombre de groupes méthylènes compris avantageusement entre 2 et 12 tels que le radical provenant de l'EDTA (acide éthylène diamino tétracétique), les radicaux octovalents de cyclohexanonyle ou cyclohexadinonyle, les radicaux provenant de composés issus de la réaction des polyols tels que la glycérine, le sorbitol, le mannitol ou le pentaérythritol avec l'acrylonitrile. Les radicaux R₁ préférés de l'invention sont les radicaux cycloaliphatiques tels que le radical tétravalent de cyclohexanonyle.

Le radical A est, de préférence, un radical méthylénique ou polyméthylénique tel que les radicaux éthyle, propyle ou butyle.

Selon un mode de réalisation préféré de l'invention, la lettre m représente un nombre entier supérieur à 3, avantageusement égal à 4, 5 ou 6.

Selon une autre caractéristique de l'invention, le radical R₃ de formule générale (III) représente des radicaux polyméthyléniques pouvant comprendre de 2 à 36 atomes de carbone ou des radicaux cycloaliphatiques ou aromatiques.

A titre d'exemple, on peut citer comme composé de formule (III), l'acide succinique, l'acide adipique, l'acide téréphtalique, l'acide isophtalique, l'acide sébacique, l'acide azélaïque, l'acide dodécanoïque, le di(β-éthylcarboxy) cyclohexanone. On peut également citer les composés diamines tels que l'hexaméthylène diamine, la méthyl-5 pentaméthylène diamine, la métaxylylène diamine, l'isophorone diamine, 1,4 diamine cyclohexane.

Les monomères de formule (II) sont avantageusement des lactames ou aminoacides tels que l'ε-caprolactame le lauryllactame, et leur ω-aminoacide. Selon l'invention, la polycondensation est réalisée en présence d'un initiateur de polycondensation classiquement utilisé dans la synthèse des polyamides par polycondensation d'un lactame ou d'un aminoacide, tel que la synthèse du polycaproamide. A titre d'exemple, on peut citer l'eau et les acides minéraux. Cet initiateur est ajouté avantageusement à une concentration pondérale dans le mélange de monomères comprise entre 0,01 et 5 % en poids.

Le polymère en sortie de polycondensation peut être mis sous forme de granulés, après mélange éventuel avec d'autres composants pour être utilisés comme matière première dans l'alimentation de procédés de mise en forme. Par exemple, le polymère est refroidi avantageusement par de l'eau et extrudé sous forme de jonc. Ces joncs sont ensuite coupés pour produire les granulés.

Pour éliminer les polymères non condensés, notamment dans le cas où le monomère de formule (IIb) est du caprolactame, les granulés sont lavés à l'eau puis séchés sous vide.

La présente invention concerne aussi une composition comprenant au moins le polyamide de l'invention.

La composition selon l'invention présente préférentiellement de 20 à 95 % en poids de polyamide selon l'invention, préférentiellement de 30 à 80 % en poids, par rapport au poids total de la composition.

La composition peut également comprendre, selon la propriété finale souhaitée, un mélange de polyamide et un ou plusieurs autres polymères, tel que par exemple un autre polyamide, du polyéthylène, du polystyrène, du polypropylène, de la résine ABS, du polycarbonate, du sulfure de polyphénylène, de l'oxyde de polyphénylène, du polyacétal, du polysulfone, de la polyéthersulfone, du polyétherimide, de la polyéthercétone, une résine d'acide polylactique, une résine de polysulfone, une résine élastomère ou des mélanges de ceux-ci. Comme autres polyamides, on peut citer les polyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, un lactame, un aminoacide ou un mélange de ces différents monomères. A titre d'exemple, on peut citer le polyadipamide d'hexaméthylène, les polyphtalamides obtenus à partir d'acide téréphtalique et/ou isophtalique tels que le polyamide commercialisé sous le nom commercial AMODEL, les copolyamides obtenus à partir d'acide adipique, d'hexaméthylène diamine et de caprolactame.

La composition peut comprendre des charges de renfort ou de remplissages, qui peuvent être par exemple des charges fibreuses et/ou des charges non fibreuses.

Comme charge fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, telle que celle du type dit coupé (chopped), notamment ayant un diamètre compris entre 7 et 14 µm. Ces charges peuvent présenter un ensimage surfacique qui assure l'adhésion mécanique entre les fibres et la matrice polyamide.

La concentration pondérale des charges de renfort ou de remplissage est comprise avantageusement entre 1 % et 80 % en poids par rapport au poids total de la composition, de préférence entre 15 et 60 %.

La composition selon l'invention peut en outre comprendre des additifs classiquement utilisés pour la fabrication de compositions polyamides. Ainsi, on peut citer les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

On peut notamment ajouter à la composition polyamide des agents modifiants la résistance aux chocs. Ce sont généralement des polymères d'élastomères qui peuvent être utilisés à cet effet, qui permettent aussi une dispersion fine dans la matrice polyamide. Typiquement, les domaines sphériques des élastomères dispersés ont un diamètre moyen inferieur à 1µm. Des exemples d'élastomères convenables sont : les éthylène-ester acrylique-anhydride maléïque, les ethylène-propylène-anhydride maléïque, les EPDM (éthylène-propylène-diène monomère) avec éventuellement un anhydride maléïque greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les ionomères d'éthylène/acide (meth-)acrylique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %.

Ces charges et additifs peuvent être ajoutés au polyamide modifié par des moyens usuels adaptés à chaque charge ou additif, tel que par exemple lors de la polymérisation ou en mélange en fondu.

L'invention concerne aussi des articles obtenus par mis en forme de la composition selon l'invention. Ces compositions peuvent être utilisées comme matière première dans le domaine des plastiques techniques, par exemple pour la réalisation d'articles obtenus par moulage par injection, par injection/soufflage, par extrusion ou par extrusion soufflage. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de moulage par injection.

De telles compositions sont utilisées pour réaliser des articles, notamment moulées, pour l'industrie automobile, la connectique, des composants électriques, des accessoires pour différentes activités telles que les activités sportives ou de loisir par exemple.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Exemple 1 Synthèse de polyamides

La polymérisation est réalisée dans un autoclave chauffé et comprenant des moyens d'agitation. Du caprolactame et du 2,2,6,6-tétra-(β-carboxyéthyl)-cyclohexanone (appelé T4) sont ajoutés dans l'autoclave avec de l'eau distillée et de l'acide adipique (appelé T2).

Le composé de cyclohexanone et son procédé de synthèse sont décrits dans l'article "The Chemistry of Acrylonitrile II - Reactions with Ketones" JACS 64 2850 (1942) de Herman Alexander Buison et Thomas W. Riener. Le mélange, mis sous agitation, est chauffé à une température de 265°C sous 6 bars. Il est maintenu à cette température et pression pendant 2 heures.

Le polyamide C1 correspond au polyamide de la demande internationale WO97/24388, le polyamide C2 correspond au polyamide de la demande internationale WO99/64496, le polyamide C3 est un polyamide classique déséquilibrée à fluidité augmentée.

Les résultats et propriétés des polyamides obtenus sont rassemblés dans le tableau 1 ci-dessous :

**Tableau 1**

| | **Moles T4** | **Moles T2** | **R= T4/T2** | **IV ISO307** | **GTA 3NO502 meq/kg** | **GTC 3NO502 meq/kg** | **MFI ASTM1238 235°C/325g g/10 min** |
|---|---|---|---|---|---|---|---|
| C1 | 0,36 | 0 | - | 114 | 23 | 142 | 9,0 |
| C2 | 0,326 | 0,072 | 4,5 | 108 | 32 | 145 | 10,1 |
| 1 | 0,036 | 0,67 | 0,05 | 114 | 30 | 146 | 10,7 |
| C3 | 0 | 0,75 | 0 | 111 | 32 | 140 | 9,8 |

Les propriétés mécaniques sont mentionnées dans le tableau 2 :

**Tableau 2**

| | **Choc Izod entaillé ISO180-1A KJ/m²** | **Choc Izod non entaillé ISO180-1U KJ/m²** | **Résistance à la traction ISO527 N/mm²** | **Module ISO507 N/mm²** |
|---|---|---|---|---|
| C1 | 5,1 | 42,2 | 61 | 2770 |
| C2 | 5,2 | 52 | 65 | 2740 |
| 1 | 5,6 | 136 | 78 | 2840 |
| C3 | 4,7 | 46 | 62 | 2770 |

### Exemple 2 Compositions polyamide chargées

Des compositions comprenant une matrice en polyamide sont chargées avec des fibres de verre par mélange à l'état fondu en extrudeuse bi-vis type WERNER et PFLEIDERER ZSK 40 à 9 fourreaux avec L/D=36. Ainsi des compositions contenant 30 % ou 50 % en poids de fibres de verre sont réalisées avec les polyamides mentionnés ci-dessus. La température d'extrusion est comprise entre 230 et 260°C, la vitesse de rotation de la vis est de 270. Le débit d'extrusion est de 40kg/h. La fibre de verre est alimentée dans le polymère fondu par l'introduction en zone 4.

Les propriétés de ces compositions sont rassemblées dans les tableaux 3 et 4 ci-après.

**Tableau 3 (30 % fibres de verre)**

| | **Choc Charpy entaillé ISO179 KJ/m²** | **Choc Charpy non entaillé ISO179 KJ/m²** | **Résistance à la traction ISO527 N/mm²** | **Module ISO507 N/mm²** | **Spirale (cm)** |
|---|---|---|---|---|---|
| C1 | 11,4 | 71,9 | 181 | 10100 | 39 |
| C2 | 11,0 | 66,5 | 180 | 9810 | 40 |
| 1 | 12,4 | 79,6 | 183 | 10920 | 47 |
| C3 | 8,4 | 42 | 152 | 9600 | 47 |

**Tableau 4 (50 % fibres de verre)**

| | **Choc Charpy entaillé ISO179 KJ/m²** | **Choc Charpy non entaillé ISO179 KJ/m²** | **Résistance à la traction ISO527 N/mm²** | **Module ISO507 N/mm²** | **Spirale (cm)** |
|---|---|---|---|---|---|
| C1 | 14,3 | 84 | 212 | 15000 | 31 |
| C2 | 14,9 | 82 | 216 | 15200 | 32 |
| 1 | 16,6 | 86 | 227 | 16500 | 33 |
| C3 | 13,2 | 75 | 204 | 15400 | 32 |

Le test spirale consiste à injecter la composition dans un moule en forme de spirale d'épaisseur 1 mm et de largeur 40 mm sous une presse BATTENFELD de 180 tonnes à une température de 270°C, une température de moule de 80°C et une pression d'injection de 80 Kg/cm². La durée d'injection est de 1,5 secondes. Le résultat du test est déterminé par la longueur de moule remplie correctement par la composition.

On observe ainsi que les polyamides selon l'invention présentent un bien meilleurs compromis de propriétés mécaniques et rhéologiques par rapport aux polyamides de l'art antérieur, en absence ou en présence de charges de renfort ou de remplissage, tout en étant simples à préparer.

## Revendications

1. Polyamide susceptible d'être obtenu par un procédé de polycondensation d'un mélange de monomères comprenant au moins :
a) des monomères de formule générale (I) suivante : 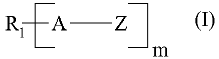
b) des monomères de formules générales (IIa) et (IIb) suivantes :
X-R₂Y (IIa)
ou 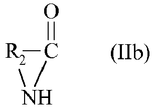
c) des monomères de formule générale (III) suivante :
Z-R₃-Z (III)
dans lesquelles :
• R₁ est un radical hydrocarboné comprenant au moins deux atomes de carbone, linéaire ou cyclique, aromatique ou aliphatique et pouvant comprendre des hétéroatomes,
• A est une liaison covalente ou un radical hydrocarboné aliphatique comprenant de 1 à 6 atomes de carbone,
• Z représente un groupement carboxylique
• R₂, R₃ identiques ou différents représentent des radicaux hydrocarbonés aliphatiques, cycloaliphatiques ou aromatiques substitués ou non comprenant de 2 à 20 atomes de carbone, et pouvant comprendre des hétéroatomes,
• X représente un radical carboxylique ou un radical amine primaire ; et Y est un radical amine primaire quand X représente un radical carboxylique, ou Y est un radical carboxylique quand X représente un radical amine primaire,
• m étant un nombre entier compris entre 3 et 8,
la concentration molaire des monomères de formule (I) dans le mélange de monomères est comprise entre 0,01 % et 1 %, le complément à 100 % correspondant aux monomères de formules générales (IIa) ou (IIb), et
le rapport molaire entre les monomères de formule (I) et les monomères de formule (III) est compris entre 0,01 et 0,4.
la concentration molaire en monomères de formule (III) est comprise entre 0,1 % et 2 %, le complément à 100 % étant constitué par les monomères de formule (IIa) ou (IIb).

2. Polyamide susceptible d'être obtenu par un procédé de polycondensation d'un mélange de monomères comprenant au moins :
a) des monomères de formule générale (I) suivante : 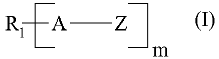
b) des monomères de formules générales (IIa) et (IIb) suivantes :
X-R₂Y (IIa)
ou 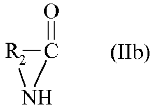
c) des monomères de formule générale (III) suivante :
Z-R₃-Z (III)
dans lesquelles :
• R₁ est un radical hydrocarboné comprenant au moins deux atomes de carbone, linéaire ou cyclique, aromatique ou aliphatique et pouvant comprendre des hétéroatomes,
• A est une liaison covalente ou un radical hydrocarboné aliphatique comprenant de 1 à 6 atomes de carbone,
• Z représente un radical amine primaire
• R₂, R₃ identiques ou différents représentent des radicaux hydrocarbonés aliphatiques, cycloaliphatiques ou aromatiques substitués ou non comprenant de 2 à 20 atomes de carbone, et pouvant comprendre des hétéroatomes,
• X représente un radical carboxylique ou un radical amine primaire ; et Y est un radical amine primaire quand X représente un radical carboxylique, ou Y est un radical carboxylique quand X représente un radical amine primaire,
• m étant un nombre entier compris entre 3 et 8,
la concentration molaire des monomères de formule (I) dans le mélange de monomères est comprise entre 0,01 % et 1 %, le complément à 100 % correspondant aux monomères de formules générales (IIa) ou (IIb), et
le rapport molaire entre les monomères de formule (I) et les monomères de formule (III) est compris entre 0,01 et 0,4.
la concentration molaire en monomères de formule (III) est comprise entre 0,1 % et 2 %, le complément à 100 % étant constitué par les monomères de formule (IIa) ou (IIb).

3. Polyamide selon l'une des revendications précédentes, **caractérisé en ce que** la concentration en nombre de chaînes polyamide de type étoile est comprise entre 0,5 et 35 %, par rapport au nombre de chaines totale de polyamide.

4. Polyamide selon l'une quelconque des revendications précédentes, **caractérisé en ce que** le radical R₁ est un radical cyclohexanonyle.

5. Polyamide selon l'une des revendications précédentes, **caractérisé en ce que** R₃ est un radical polyméthylénique comprenant de 2 à 36 atomes de carbone.

6. Polyamide selon la revendication 1, **caractérisé en ce que** le composé de formule (III) est choisi dans le groupe constitué par : l'acide succinique, l'acide adipique, l'acide téréphtalique, l'acide isophtalique, l'acide sébacique, l'acide azélaïque, l'acide dodécanoïque, le di(β-éthylcarboxy) cyclohexanone.

7. Polyamide selon la revendication 2, **caractérisé en ce que** le composé de formule (III) est choisi dans le groupe constitué par : l'hexaméthylène diamine, la méthyl-5 pentaméthylène diamine, la métaxylylène diamine, l'isophorone diamine, et la 1,4 diamine cyclohexane.

8. Polyamide selon l'une des revendications précédentes, **caractérisé en ce que** le monomère de formule (IIb) est l'ε-caprolactame.

9. Composition comprenant au moins un polyamide selon l'une des revendications 1 à 8.

10. Composition comprenant de 20 à 95 % en poids de polyamide selon l'une quelconque des revendications 1 à 8, par rapport au poids total de la composition.

11. Composition selon la revendication 9 ou 10, **caractérisée en ce qu'**elle comprend des charges de renfort ou de remplissage.

12. Article obtenu par mise en forme de la composition selon l'une quelconque des revendications 9 à 11.

## Patentansprüche

1. Polyamid, das erhalten werden kann durch ein Polykondensationsverfahren eines Monomerengemisches, umfassend mindestens:
a) Monomere der folgenden allgemeinen Formel (I) 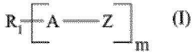
b) Monomere der folgenden allgemeinen Formeln (IIa) und (IIb):
X-R₂-Y (IIa)
oder 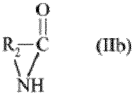
c) Monomere der folgenden allgemeinen Formel (III)
Z-R₃-Z (III)
worin:
• R₁ ein linearer oder cyclischer, aromatischer oder aliphatischer Kohlenwasserstoffrest ist, der mindestens zwei Kohlenstoffatome umfasst und Heteroatome umfassen kann,
• A eine kovalente Bindung oder ein aliphatischer Kohlenwasserstoffrest ist, der 1 bis 6 Kohlenstoffatome umfasst,
• Z eine Carboxylgruppe darstellt
• R₂, R₃, identisch oder verschieden, aliphatische, cycloaliphatische oder aromatische Kohlenwasserstoffreste darstellen, substituiert oder nicht, die 2 bis 20 Kohlenstoffatome umfassen und Heteroatome umfassen können,
• X einen Carboxylrest oder einen primären Aminrest darstellt; und Y ein primärer Aminrest ist, wenn X einen Carboxylrest darstellt, oder Y ein Carboxylrest ist, wenn X einen primären Aminrest darstellt,
• m eine ganze Zahl im Bereich zwischen 3 und 8 ist,
wobei die molare Konzentration von Monomeren der Formel (I) in dem Monomerengemisch im Bereich zwischen 0,01 % und 1 % liegt, wobei die Ergänzung auf 100 % den Monomeren der allgemeinen Formeln (IIa) oder (IIb) entspricht, und
das molare Verhältnis zwischen den Monomeren der Formel (I) und den Monomeren der Formel (III) im Bereich zwischen 0,01 und 0,4 liegt,
die molare Konzentration an Monomeren der Formel (III) im Bereich zwischen 0,1 % und 2 % liegt, wobei die Ergänzung auf 100 % aus den Monomeren der Formel (IIa) oder (IIb) besteht.

2. Polyamid, das erhalten werden kann durch ein Polykondensationsverfahren eines Monomerengemisches, umfassend mindestens:
a) Monomere der folgenden allgemeinen Formel (I): 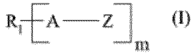
b) Monomere der folgenden allgemeinen Formeln (IIa) und (IIb)
X-R₂-Y (IIa)
oder 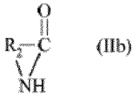
c) Monomere der folgenden allgemeinen Formel (III)
Z-R₃-Z (III)
worin:
• R₁ ein linearer oder cyclischer, aromatischer oder aliphatischer Kohlenwasserstoffrest ist, der mindestens zwei Kohlenstoffatome umfasst und Heteroatome umfassen kann,
• A eine kovalente Bindung oder ein aliphatischer Kohlenwasserstoffrest ist, der 1 bis 6 Kohlenstoffatome umfasst,
• Z einen primären Aminrest darstellt
• R₂, R₃, identisch oder verschieden, aliphatische, cycloaliphatische oder aromatische Kohlenwasserstoffreste darstellen, substituiert oder nicht, die 2 bis 20 Kohlenstoffatome umfassen und Heteroatome umfassen können,
• X einen Carboxylrest oder einen primären Aminrest darstellt; und Y ein primärer Aminrest ist, wenn X einen Carboxylrest darstellt, oder Y ein Carboxylrest ist, wenn X einen primären Aminrest darstellt,
• m eine ganze Zahl im Bereich zwischen 3 und 8 ist,
wobei die molare Konzentration von Monomeren der Formel (I) in dem Monomerengemisch im Bereich zwischen 0,01 % und 1 % liegt, wobei die Ergänzung auf 100 % den Monomeren der allgemeinen Formeln (IIa) oder (IIb) entspricht, und
das molare Verhältnis zwischen den Monomeren der Formel (I) und den Monomeren der Formel (III) im Bereich zwischen 0,01 und 0,4 liegt,
die molare Konzentration an Monomeren der Formel (III) im Bereich zwischen 0,1 % und 2 % liegt, wobei die Ergänzung auf 100 % aus den Monomeren der Formel (IIa) oder (IIb) besteht.

3. Polyamid nach einem der vorstehenden Ansprüche, **dadurch gekennzeichnet, dass** die Anzahlkonzentration von Polyamidketten des Sterntyps bezogen auf die Gesamtkettenanzahl von Polyamid im Bereich zwischen 0,5 % und 35 % liegt.

4. Polyamid nach einem der vorstehenden Ansprüche, **dadurch gekennzeichnet, dass** der Rest R₁ ein Cyclohexanonylrest ist.

5. Polyamid nach einem der vorstehenden Ansprüche, **dadurch gekennzeichnet, dass** R₃ ein Polymethylenrest ist, der 2 bis 36 Kohlenstoffatome umfasst.

6. Polyamid nach Anspruch 1, **dadurch gekennzeichnet, dass** die Verbindung der Formel (III) ausgewählt ist aus der Gruppe, bestehend aus: Bernsteinsäure, Adipinsäure, Terephthalsäure, Isophthalsäure, Sebacinsäure, Azealinsäure, Dodecansäure, Di(β-ethylcarboxy)cyclohexanon.

7. Polyamid nach Anspruch 2, **dadurch gekennzeichnet, dass** die Verbindung der Formel (III) ausgewählt ist aus der Gruppe, bestehend aus: Hexamethylendiamin, Methyl-5-pentamethylendiamin, meta-Xylylendiamin, Isophorondiamin und 1,4-Diaminocyclohexan.

8. Polyamid nach einem der vorstehenden Ansprüche, **dadurch gekennzeichnet, dass** das Monomer der Formel (IIb) ε-Caprotactam ist.

9. Zusammensetzung, die mindestens ein Polyamid nach einem der Ansprüche 1 bis 8 umfasst.

10. Zusammensetzung, die bezogen auf das Gesamtgewicht der Zusammensetzung 20 bis 95 Gewichts-% Polyamid nach einem der Ansprüche 1 bis 8 umfasst.

11. Zusammensetzung nach Anspruch 9 oder 10, **dadurch gekennzeichnet, dass** sie Füllstoffe zum Verstärken oder zum Füllen umfasst.

12. Artikel, erhalten durch Formgebung der Zusammensetzung nach einem der Ansprüche 9 bis 11.

## Claims

1. Polyamide obtainable by a method of polycondensation of a monomer mixture comprising at least:
a) monomers of the following general formula (I): 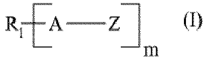
b) monomers of the following general formulae (IIa) and (IIb):
X-R₂-Y (IIa)
or 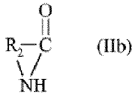
c) monomers of the following general formula (III):
**Z-R₃-Z** **(III)**
wherein:
• R₁ is a hydrocarbon radical comprising at least two carbon atoms, linear or cyclic, aromatic or aliphatic and which may comprise heteroatoms,
• A is a covalent bond or an aliphatic hydrocarbon radical comprising from 1 to 6 carbon atoms,
• Z represents a carboxylic group,
• R₂ and R₃, which may be identical or different, represent substituted or unsubstituted aliphatic, cycloaliphatic or aromatic hydrocarbon radicals comprising from 2 to 20 carbon atoms, and which may comprise heteroatoms,
• X represents a carboxylic radical or a primary amino radical; and Y is a primary amino radical when X represents a carboxylic radical, or Y is a carboxylic radical when X represents a primary amino radical,
• m being an integer between 3 and 8,
the molar concentration of the monomers of formula (I) in the monomer mixture is between 0.01% and 1%, the complement to 100% corresponding to the monomers of general formulae (IIa) or (IIb), and
the molar ratio of monomers of formula (I) to monomers of formula (III) is between 0.01 and 0.4,
the molar concentration of monomers of formula (III) is between 0.1% and 2%, the remainder to 100% consisting of monomers of formula (IIa) or (IIb).

2. Polyamide obtainable by a method of polycondensation of a monomer mixture comprising at least:
a) monomers of the following general formula (I): 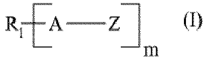
b) monomers of the following general formulae (IIa) and (IIb):
X-R₂-Y (IIa)
or 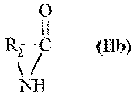
c) monomers of the following general formula (III):
**Z-R₃-Z** **(III)**
wherein:
• R₁ is a hydrocarbon radical comprising at least two carbon atoms, linear or cyclic, aromatic or aliphatic and which may comprise heteroatoms,
• A is a covalent bond or an aliphatic hydrocarbon radical comprising from 1 to 6 carbon atoms,
• Z represents a primary amino radical,
• R₂ and R₃, which may be identical or different, represent substituted or unsubstituted aliphatic, cycloaliphatic or aromatic hydrocarbon radicals comprising from 2 to 20 carbon atoms, and which may comprise heteroatoms,
• X represents a carboxylic radical or a primary amino radical; and Y is a primary amino radical when X represents a carboxylic radical, or Y is a carboxylic radical when X represents a primary amino radical,
• m being an integer between 3 and 8,
the molar concentration of the monomers of formula (I) in the monomer mixture is between 0.01% and 1%, the complement to 100% corresponding to the monomers of general formulae (IIa) or (IIb), and
the molar ratio between the monomers of formula (I) and the monomers of formula (III) is between 0.01 and 0.4,
the molar concentration of monomers of formula (III) is between 0.1% and 2%, the remainder to 100% consisting of monomers of formula (IIa) or (IIb).

3. Polyamide according to one of the preceding claims, **characterized in that** the concentration in number of star-shaped polyamide chains is between 0.5 and 35%, relative to the total number of polyamide chains.

4. Polyamide according to any of the preceding claims, **characterized in that** the R₁ radical is a cyclohexanonyl radical.

5. Polyamide according to any of the preceding claims, **characterized in that** R₃ is a polymethylene radical comprising from 2 to 36 carbon atoms.

6. Polyamide according to claim 1, **characterized in that** the compound of formula (III) is chosen from the group consisting of: succinic acid, adipic acid, terephthalic acid, isophthalic acid, sebacic acid, azelaic acid, dodecanoic acid, di(β-ethylcarboxy) cyclohexanone.

7. Polyamide according to claim 2, **characterized in that** the compound of formula (III) is selected from the group consisting of:
hexamethylene diamine, 5-methyl pentamethylene diamine, metaxylylene diamine, isophorone diamine, and 1,4 cyclohexane diamine.

8. Polyamide according to one of the preceding claims, **characterized in that** the monomer of formula (IIb) is ε-caprolactam.

9. Composition comprising at least one polyamide according to one of the claims 1 to 8.

10. Composition comprising from 20 to 95% by weight of polyamide according to any one of claims 1 to 8, based on the total weight of the composition.

11. Composition according to claim 9 or 10 **characterised in that** it comprises reinforcing or filling fillers.

12. Article obtained by shaping the composition according to any one of claims 9 to 11.
